# EUROPEAN PATENT SPECIFICATION

(11) **EP 2 123 162 B1**
(45) Date of publication and mention of the grant of the patent: **26.12.2018**
(21) Application number: 09159509.0
(22) Date of filing: 06.05.2009
(51) Int. Cl.: A21D 13/32, A21C 15/00

(54) **Apparatus for filling a baked good**
Vorrichtung zum Füllen einer Backware
Appareil de remplissage d'un aliment cuit

(30) Priority: 09.05.2008 IT TO20080343
(43) Date of publication of application: 25.11.2009
(73) Proprietor: Soremartec S.A., 2632 Findel (LU); Ferrero S.p.A., 12051 Alba (Cuneo) (IT)
(72) Inventor: LONGO, Marco, I-12042, BRA (Cuneo) (IT)
(74) Representative: Rambelli, Paolo

(56) References cited:
- EP-A2- 0 813 937
- DE-U1- 29 521 710
- JP-A- 2003 182 706
- US-A- 4 275 647
- US-A1- 2004 108 332

## Description

This invention relates to automated or semiautomated apparatus for filling a bread roll or similar baked good.

The invention has been devised with particular reference to the problem of providing apparatus suitable for supplying, to the inside of a baked good, a metered and evenly distributed quantity of a filling having a high viscosity, such as a spread of the type known commercially by the trademark NUTELLA®.

Spreads of the kind indicated above have an extremely high viscosity at room temperature, e.g. of around 5000 to 15 000 mPa.s at a temperature of 26°C (IOCCC method 46-2000), which makes them quite difficult to meter by volume. The fluidity of these spreads can be improved by reducing their viscosity by heating; however, heating is not generally desirable because over time it can cause an organoleptically unacceptable separation of the oily phase contained in them.

EP 0 813 937 describes an apparatus for cutting food products including an ultrasound cutting element (2) associated with a drive mechanism (4) which enables the rate of advance of the cutting element (2) through the product (A) being cut to be varied selectively and locally. The preferred application is for cutting layered food products (A).

US 4 275 647 describes an apparatus for producing a tubular centerfilled food product having a rigid, friable baked outer shell and a core of edible filling material by a continuous, straight-through process; a semi-liquid batter having a relatively high content of mono-and/or disaccharides is carried between a pair of spaced apart heated moving surfaces and baked to form a sheet having a controlled thickness; as the baked sheet is rolled around its longitudinal axis, a viscous edible filling material is injected into the core of the continuous tube as it is formed.

US 2004/108332 describes an apparatus for dispensing a condiment into a food product comprising an outlet nozzle configured to pierce the exterior of the food product, thereby to cause the transfer of the condiment through the nozzle into the interior of the food product. After the food product is injected with the condiment, an automated injection assembly withdraws the injection nozzle from the interior of the food product.

It is therefore a first object of the invention to provide apparatus suitable for filling a baked good with a constant and reproducible volumetric serving of a quantity of highly viscous filling, without having to modify its fluidity and hence its organoleptic properties.

Another object of the invention is to provide apparatus that is compact and easy to use and therefore suitable for use in places where food is served for sale, where the apparatus can be used by a member of staff or directly by the consumer.

Given these objects, the subject of the invention is apparatus for filling a bread roll or similar baked good, as defined in the appended claims.

Other features of the apparatus according to the invention will become clear in the course of the following detailed description, which refers to the appended drawings provided by way of non-restrictive example, in which:
- Figure 1 shows a functional diagram of the filling apparatus; and
- Figure 2 is a perspective diagrammatic view of a structure for the apparatus according to the invention.

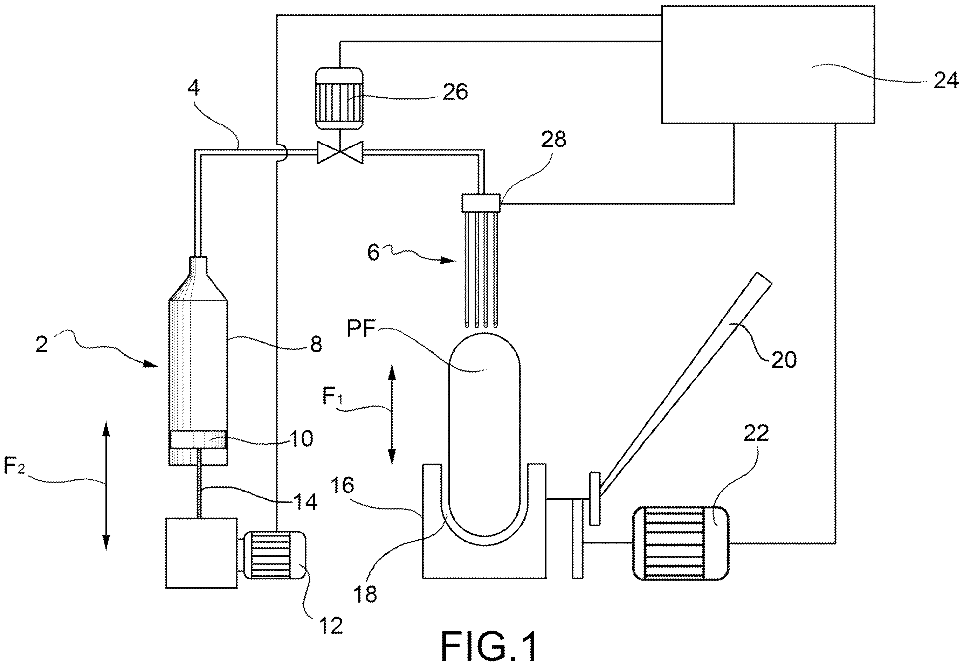

With reference initially to the functional diagram in Figure 1, the apparatus comprises a metering unit 2 which, via a pipe 4, supplies a metered quantity of filling to dispensing and cutting means marked 6.

The metering unit consists of a cylinder 8 with a piston 10 actuated by motor means 12. The motor means 12 are preferably in the form of a stepper motor, which turns the threaded rod 14 of the piston in such a way as to cause it to move axially as indicated by the arrow F2.

The motor means are designed to cause axial movement of the threaded rod 14 in both directions of the arrow F2; the motor means preferably cause an outward movement of the rod and piston inside the cylinder 8 at a constant speed, so as to generate a constant dispensing flowrate during the metering; but the possibility of varying the outward speed while metering, generating for example an intermediate maximum speed to increase the quantity of filling dispensed into a particular area of the baked good, may be provided.

In one embodiment the metering means are designed to cause a reversal of the outward stroke of the rod immediately before the metering cycle, in order to draw back by suction the quantity of filling and prevent filling dripping out.

Connected at an intermediate point in the pipe 4 is a metering valve 26, preferably a servocontrolled valve.

The dispensing and cutting means 6 may take the form of a tubular knife or one or more sharp tubular members suitable for penetrating into the baked good in order to dispense the quantity of filling inside it. It should be understood that the cross section of flow of the dispensing and cutting means 6 can be varied considerably to suit the filling characteristics which it is wished to obtain.

For example, in one embodiment a single tubular dispensing knife element may be used, or a plurality of mutually adjacent tubular elements 7 may be provided, each of these extruding a separate bead of filling into the baked good.

Reference number 16 is a support member provided with a receiving seat 18 for the baked good PF. The support member 16 and the dispensing and cutting means 6 are movable relative to each other, preferably in a vertical direction indicated by the double-headed arrow F1.

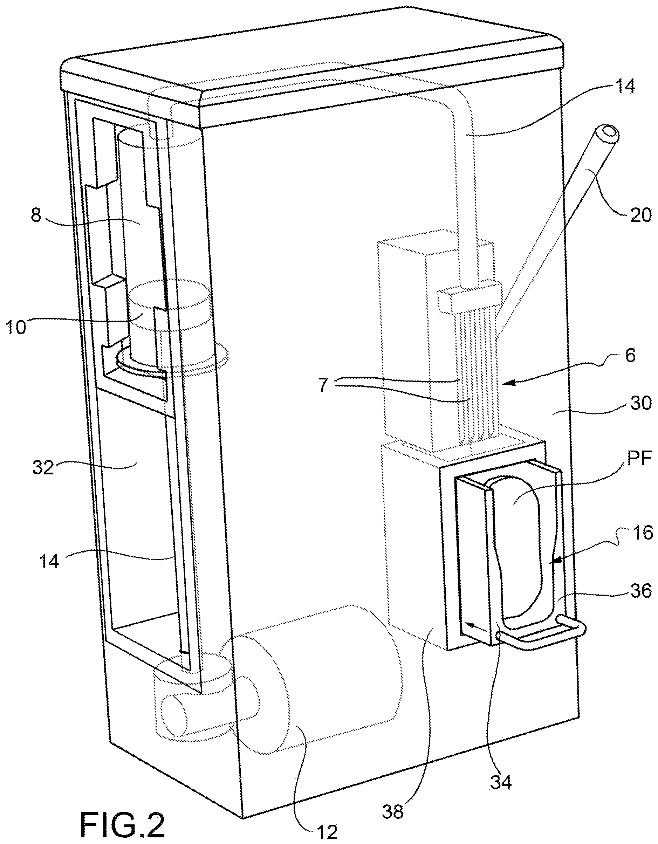

The relative movement takes place between a first position in which the support member 16 and the dispensing and cutting means 6 are separated, to allow the baked good to be positioned in the support member (the loading position of the baked good, shown in Figures 1 and 2), and a second position, in which the dispensing and cutting means 6 have penetrated into the baked good (the filling position, not shown).

The dispensing and cutting means 6 are preferably stationary and the support member is preferably movable vertically. The relative movement is controlled by actuator means 20 and/or 22.

In one embodiment, the actuator means comprise a hand lever member 20, designed to be hand-actuated by the user, to move the support member 16 from the baked good loading position to the filling position; but it is of course possible to conceive of an arrangement in which this movement is actuated by motor means 22, controlled by the user or by a monitoring and control unit 24.

Motor means 22 are however provided to bring about the relative moving away movement of the support member 16 with respect to the dispensing and cutting means 6 starting from the abovementioned filling position while the quantity of filling is being dispensed into the baked good.

Said motor means 22 are preferably capable of bringing about the movement of the support and baked good carried by the latter at a constant speed or, if desired, at varying speeds determinable by the operator.

With a constant speed of movement in conjunction with a constant flowrate of dispensing of the quantity of filling, it is possible to create an even distribution of the quantity of filling inside the baked good, that is, a constant value of the quantity of filling throughout the length of the baked good that is the object of the filling.

The apparatus preferably comprises a monitoring and control unit 24 suitable for controlling in an automated or semi-automated manner the operating cycle of the filling apparatus and, preferably, also suitable for allowing the user to set and select the operating parameters.

To be specific, the monitoring and control unit 24 may be designed to control:
- the quantity of filling delivered in each individual serving; a typical serving is approximately 30-40 g;
- the time taken to dispense the abovementioned metered quantity by setting the speed of rotation of the threaded rod 14 driven by the motor 12; and
- the speed of the separating motion of the support member 16 away from the position in which filling begins, and while the quantity of filling is metered.

In the operating cycle, the baked good is usually positioned by hand in the receiving seat 18 of the support member 16. However, the scope of the invention includes the possibility that the apparatus may be provided with auxiliary means for automatically loading the product to be filled: for example, by conveying means which transfer the product to the receiving seat of the support member.

The user then actuates the lever 20 by hand or, for example by means of a button, activates the motor means 22 to move the support member to the filling position in which the dispensing and cutting means 6 have penetrated into the baked good; a position sensor 28 tells the monitoring and control unit 24 when the support member and baked good housed in it have reached the filling position.

The monitoring and control unit 24 then activates the motor 12 and also opens the metering valve 26 mounted on the pipe 4; the motor 12, which as indicated earlier is preferably a stepper motor, turns the threaded rod 14 to cause it to advance and so dispense the predetermined metered quantity of filling.

When the quantity of filling is initially delivered into the baked good, the monitoring and control unit 24 activates the motor means 22, which cause the support member to move gradually away from the filling position while the quantity of filling is dispensed.

Figure 2 shows the structure of filling apparatus according to the invention, in a form particularly suitable for use in a place where food is served for sale.

In Figure 2, parts corresponding to those in the functional diagram seen in Figure 1 are given the same reference numbers.

The apparatus generally comprises an external enclosure 30 housing a support structure 32 on which the working parts described above are mounted.

In a preferred embodiment, illustrated in Figure 2, the support member 16 comprises a drawer unit 34 with a drawer 36 that slides horizontally in a prism-shaped enclosure 38, from an extracted position, allowing the user to load the baked good (optionally using auxiliary means of loading and conveying the baked good), to a retracted position, in which the drawer 36 is aligned vertically with the dispensing and cutting means 6. The drawer 36, activated by the lever 20, is able to move vertically.

In the example illustrated, the dispensing and cutting means 6 take the form of a plurality of mutually parallel tubular elements 7 having sharpened ends capable of penetrating into the baked good; as already indicated, the configuration of the dispensing means may vary considerably depending on the desired filling model.

The cylinder-and-piston metering unit may comprise a replaceable tubular cartridge containing the desired filling spread.

Preferably, the metering unit 2, the pipe 4 which supplies a metered quantity of filling to the dispensing and cutting means 6 and/or the dispensing and * means themselves are equipped with thermostat means which allow the user to set a given temperature suitable to achieve the desired rheological properties of the filling.

It should be understood that the scope of the invention includes filling apparatus that comprises a plurality of piston-and-cylinder metering means, for example of the cartridge type indicated above, each provided with a respective outflow pipe and where each outflow pipe may flow into a single delivery pipe in the dispensing and cutting means, thus enabling the user to choose different filling spreads.

The scope of the invention also includes apparatus allowing the simultaneous or sequential filling of a plurality of baked goods and including a corresponding plurality of metering means and dispensing and cutting means, each operating with its own baked good support member.

The apparatus according to the invention may furthermore be configured as apparatus that can be activated by inserting a token and/or that has selector means enabling the user to select predetermined filling parameters, such as for example the type of spread and the quantity of filling and/or other parameters controlled by the monitoring and control unit, such as the flow temperature controlled by the above mentioned thermostat means.

The baked good may be of a different type, such as a bread roll, a bun, a sponge cake or the like.

## Claims

1. Apparatus for filling a baked good, comprising:
- a support member (16) provided with a receiving seat (18) suitable for supporting the baked good (PF) to be filled;
- dispensing and cutting means (6) designed to penetrate into the baked good (PF) and dispense into its interior a quantity of filling;
- actuator means (20, 22) suitable for causing a relative movement of the support member (16) with respect to said dispensing and cutting means (6) between a loading position in which the baked good (PF) is loaded into the support member (16), and a filling position in which the dispensing and cutting means (6) have penetrated into the baked good (PF); and
- cylinder (8)-and-piston (10) metering means (2) suitable for supplying a predetermined quantity of filling to said dispensing and cutting means (6) **characterized in that** said actuator means comprise motor means (22) which cause a relative moving away movement of the support member (16) with respect to said dispensing and cutting means (6) starting from said filling position, while the quantity of filling is being dispensed into the baked good.

2. Apparatus according to Claim 1, **characterized in that** said motor means (22) are suitable for causing a relative movement of the support member (16) with respect to said dispensing and cutting means (6) at a constant speed.

3. Apparatus according to Claim 1 or 2, **characterized in that** said cylinder-and-piston means (8, 10) are designed to supply said quantity of filling at a constant flowrate.

4. Apparatus according to Claim 3, **characterized in that** said cylinder-and-piston means (8, 10) comprise a piston (10) with a threaded rod (14) turned by a stepper motor (12).

5. Apparatus according to any one of the preceding claims, **characterized in that** said actuator means (20, 22) comprise a hand-actuable lever member (20) for moving said support member (16) from the baked good (PF) loading position to the filling position.

6. Apparatus according to any one of Claims 1 to 4, **characterized in that** said actuator means (20, 22) comprise motor means (22) for moving said support member (16) from the baked good loading position to the filling position.

7. Apparatus according to any one of the preceding claims, **characterized in that** said dispensing and cutting means (6) are stationary and said support member (16) is movable vertically from said loading position to said filling position.

8. Apparatus according to any one of the preceding claims, **characterized in that** said dispensing and cutting means (6) comprise a plurality of mutually adjacent tubular elements (7) with sharp ends suitable for penetrating into said baked good (PF).

9. Apparatus according to any one of the preceding claims, **characterized in that** it comprises a monitoring and control unit (24) designed for activating said metering means (8, 10, 12) to dispense the quantity of filling when said support member (16) is in the filling position.

10. Apparatus according to Claim 9, **characterized in that** it comprises position sensor means (28) suitable for telling said monitoring and control unit (24) the moment at which said support member (16) is in the filling position.

11. Apparatus according to any one of the preceding claims, **characterized in that** it comprises a monitoring and control unit (24) working with the motor means (12) of said metering means (8, 10) to control the quantity of filling dispensed in a single serving.

12. Apparatus according to Claim 11, **characterized in that** said monitoring and control unit (24) is designed to adjust the speed of movement of said support member (16) away from said filling position while said quantity of filling is being dispensed.

13. Apparatus according to Claim 11, **characterized in that** said monitoring and control unit (24) is designed to order the dispensing of the quantity of filling by said metering means (8, 10) at a constant dispensing flowrate or at a dispensing flowrate having a maximum or a minimum during a single serving.

14. Apparatus according to Claim 11 or 12, **characterized in that** said monitoring and control unit (24) is designed to cause a reversal of the outward stroke of said piston (10) inside the cylinder (8) before the end of the metering cycle.

15. Apparatus according to any of the preceding claims, wherein said metering means (2) supply said quantity of filling to said dispensing and cutting means (6) via pipe means (4) and wherein said metering means (2), said pipe means (4) and/or said dispensing and cutting means (6) are equipped with thermostat means.

16. Use of apparatus according to any one of the preceding claims, for filling a baked good with a quantity of filling having a viscosity of from 5000 to 15 000 mPa.s at a temperature of 26°C (IOCCC method 46-2000).

## Patentansprüche

1. Vorrichtung zum Füllen einer Backware, die aufweist:
ein Unterstützungselement (16), das mit einem Aufnahmesitz (18) vorgesehen ist, der zum Unterstützen der zu füllenden Backware (PF) geeignet ist;
Abgabe- und Schneidmittel (6), die eingerichtet sind, um in die Backware (PF) einzudringen und eine Füllmenge ins Innere derselben abzugeben;
Betätigungsmittel (20, 22), die geeignet sind, um eine Relativbewegung des Unterstützungselements (16) bezüglich der Abgabe- und Schneidmittel (6) zu bewirken, zwischen einer Ladeposition, in der die Backware (PF) in das Unterstützungselement (16) eingebracht wird, und einer Füllposition, in der die Abgabe- und Schneidmittel (6) in die Backware (PF) eingebracht werden; und
Zylinder(8)-Kolben(10)-Dosiermittel (2), die geeignet sind, um den Abgabe- und Schneidmitteln (6) eine bestimmte Füllmenge zuzuführen, **dadurch gekennzeichnet, dass** die Betätigungsmittel Motormittel (22) aufweisen, die eine relative Wegbewegung des Unterstützungselements (16) bezüglich der Abgabe- und Schneidmittel (6) beginnend von der Füllposition bewirken, während die Füllmenge in die Backware abgegeben wird.

2. Vorrichtung nach Anspruch 1, **dadurch gekennzeichnet, dass** die Motormittel (22) geeignet sind, eine Relativbewegung des Unterstützungselements (16) bezüglich der Abgabe- und Schneidmittel (6) mit einer konstanten Geschwindigkeit zu bewirken.

3. Vorrichtung nach Anspruch 1 oder 2, **dadurch gekennzeichnet, dass** die Zylinder-und-Kolbenmittel (8, 12) eingerichtet sind, um die Füllmenge mit einer konstanten Strömungsgeschwindigkeit zuzuführen.

4. Vorrichtung nach Anspruch 3, **dadurch gekennzeichnet, dass** die Zylinder-und-Kolbenmittel (8, 10) einen Kolben (10) mit einem Gewindestab (14), der von einem Schrittmotor (12) in Drehung versetzt wird, aufweisen.

5. Vorrichtung nach einem der vorigen Ansprüche, **dadurch gekennzeichnet, dass** die Betätigungsmittel (20, 22) ein handbetätigbares Hebelelement (20) zum Bewegen des Unterstützungselements (16) von der Ladeposition der Backware (PF) zur Füllposition aufweist.

6. Vorrichtung nach einem der Ansprüche 1 bis 4, **dadurch gekennzeichnet, dass** die Betätigungsmittel (20, 22) Motormittel (22) zum Bewegen des Unterstützungselements (16) von der Ladeposition der Backware zur Füllposition aufweisen.

7. Vorrichtung nach einem der vorigen Ansprüche, **dadurch gekennzeichnet, dass** die Abgabe- und Schneidmittel (6) stationär sind und das Unterstützungselement (16) von der Ladeposition vertikal zur Füllposition bewegbar ist.

8. Vorrichtung nach einem der vorigen Ansprüche, **dadurch gekennzeichnet, dass** die Abgabe- und Schneidmittel (6) mehrere jeweils benachbarte röhrenförmige Elemente (7) mit scharfen Enden aufweisen, die zum Eindringen in die Backware (PF) geeignet sind.

9. Vorrichtung nach einem der vorigen Ansprüche, **dadurch gekennzeichnet, dass** diese eine Überwachungs- und Steuereinheit (24) aufweist, die eingerichtet ist, um die Dosiermittel (8, 10, 12) zur Abgabe der Füllmenge zu betätigen, wenn sich das Unterstützungselement (16) in der Füllposition befindet.

10. Vorrichtung nach Anspruch 9, **dadurch gekennzeichnet, dass** diese Positionssensormittel (28) aufweist, die geeignet sind, um der Überwachungs- und Steuereinheit (24) den Zeitpunkt mitzuteilen, an dem sich das Unterstützungselement (16) in der Füllposition befindet.

11. Vorrichtung nach einem der vorigen Ansprüche, **dadurch gekennzeichnet, dass** diese eine Überwachungs- und Steuereinheit (24) aufweist, die mit den Motormitteln (12) der Dosiermittel (8, 10) arbeitet, um die in einer einzigen Portionierung abgegebene Füllmenge zu steuern.

12. Vorrichtung nach Anspruch 11, **dadurch gekennzeichnet, dass** die Überwachungs- und Steuereinheit (24) eingerichtet ist, um die Bewegungsgeschwindigkeit des Unterstützungselements (16) von der Füllposition weg einzustellen, während die Füllmenge abgegeben wird.

13. Vorrichtung nach Anspruch 11, **dadurch gekennzeichnet, dass** die Überwachungs- und Steuereinheit (24) eingerichtet ist, um die Abgabe der Füllmenge durch die Dosiermittel (8, 10) mit einer konstanten Abgabeströmungsgeschwindigkeit oder einer Abgabeströmungsgeschwindigkeit, die während einer einzigen Portionierung ein Maximum oder Minimum aufweist, zu veranlassen.

14. Vorrichtung nach Anspruch 11 oder 12, **dadurch gekennzeichnet, dass** die Überwachungs- und Steuereinheit (24) eingerichtet ist, um vor dem Ende des Dosiervorgangs eine Umkehrung des nach außen gerichteten Hubs des Kolbens (10) in dem Zylinder (8) zu bewirken.

15. Vorrichtung nach einem der vorigen Ansprüche, bei der die Dosiermittel (2) die Füllmenge den Abgabe- und Schneidmitteln (6) über Rohrmittel (4) zuführen, und die Dosiermittel (2), die Rohrmittel (4) und/oder die Abgabe- und Schneidmittel (6) mit Thermostatmitteln ausgestattet sind.

16. Verwendung der Vorrichtung nach einem der vorigen Ansprüche zum Füllen einer Backware mit einer Füllmenge, die eine Viskosität von 5.000 bis 15.000 mPa·s bei einer Temperatur von 26°C aufweist (IOCCC-Verfahren 46-2000).

## Revendications

1. Appareil pour remplir un aliment cuit, comprenant :
- un organe de support (16) doté d'un siège de réception (18) approprié pour supporter l'aliment cuit (PF) à remplir ;
- un moyen de distribution et de coupe (6) conçu pour pénétrer dans l'aliment cuit (PF) et distribuer à l'intérieur de celui-ci une quantité de garniture ;
- un moyen formant actionneur (20, 22) approprié pour amener un mouvement relatif de l'organe de support (16) par rapport audit moyen de distribution et de coupe (6) entre une position de chargement dans laquelle l'aliment cuit (PF) est chargé dans l'organe de support (16), et une position de remplissage dans laquelle le moyen de distribution et de coupe (6) a pénétré dans l'aliment cuit (PF) ; et
- un moyen de dosage à cylindre (8) et piston (10) (2) approprié pour introduire une quantité prédéterminée de garniture dans ledit moyen de distribution et de coupe (6) **caractérisé en ce que** ledit moyen formant actionneur comprend un moyen formant moteur (22) qui entraîne un mouvement d'éloignement relatif de l'organe de support (16) par rapport audit moyen de distribution et de coupe (6) en partant de ladite position de remplissage, en même temps que la quantité de garniture est distribuée dans l'aliment cuit.

2. Appareil selon la revendication 1, **caractérisé en ce que** ledit moyen formant moteur (22) est approprié pour entraîner un mouvement relatif de l'organe de support (16) par rapport audit moyen de distribution et de coupe (6) selon une vitesse constante.

3. Appareil selon la revendication 1 ou 2, **caractérisé en ce que** ledit moyen formant cylindre et piston (8, 10) est conçu pour introduire ladite quantité de garniture selon un débit constant.

4. Appareil selon la revendication 3, **caractérisé en ce que** ledit moyen formant cylindre et piston (8, 10) comprend un piston (10) avec une tige filetée (14) mise en rotation par un moteur pas-à-pas (12).

5. Appareil selon l'une quelconque des revendications précédentes, **caractérisé en ce que** ledit moyen formant actionneur (20, 22) comprend un organe levier actionnable manuellement (20) pour déplacer ledit organe de support (16) de la position de chargement d'aliment cuit (PF) à la position de remplissage.

6. Appareil selon l'une quelconque des revendications 1 à 4, **caractérisé en ce que** ledit moyen formant actionneur (20, 22) comprend un moyen formant moteur (22) pour déplacer ledit organe de support (16) de ladite position de chargement d'aliment cuit à la position de remplissage.

7. Appareil selon l'une quelconque des revendications précédentes, **caractérisé en ce que** ledit moyen de distribution et de coupe (6) est stationnaire et ledit organe de support (16) est mobile verticalement de ladite position de chargement à ladite disposition de remplissage.

8. Appareil selon l'une quelconque des revendications précédentes, **caractérisé en ce que** ledit moyen de distribution et de coupe (6) comprend une pluralité d'éléments tubulaires adjacents mutuellement (7) avec des extrémités pointues appropriées pour pénétrer dans ledit aliment cuit (PF).

9. Appareil selon l'une quelconque des revendications précédentes, **caractérisé en ce qu'**il comprend une unité de surveillance et de commande (24) conçue pour activer ledit moyen de dosage (8, 10, 12) pour distribuer la quantité de garniture lorsque ledit organe de support (16) se trouve dans la position de remplissage.

10. Appareil selon la revendication 9, **caractérisé en ce qu'**il comprend un moyen formant capteur de position (28) approprié pour communiquer à ladite unité de surveillance et de commande (24) à quel moment ledit organe de support (16) se trouve dans la position de remplissage.

11. Appareil selon l'une quelconque des revendications précédentes, **caractérisé en ce qu'**il comprend une unité de surveillance et de commande (24) fonctionnant avec le moyen formant moteur (12) dudit moyen de dosage (8, 10) pour commander la quantité de garniture distribuée sous forme de portion individuelle.

12. Appareil selon la revendication 11, **caractérisé en ce que** ladite unité de surveillance de commande (24) est conçue pour ajuster la vitesse de déplacement dudit organe de support (16) à l'écart de ladite position de remplissage en même temps que ladite quantité de garniture est distribuée.

13. Appareil selon la revendication 11, **caractérisé en ce que** ladite unité de surveillance et de commande (24) est conçue pour ordonner la distribution de la quantité de garniture par ledit moyen de dosage (8, 10) selon un débit de distribution constant ou selon un débit de distribution ayant un maximum ou un minimum pendant la distribution d'une portion individuelle.

14. Appareil selon la revendication 11 ou 12, **caractérisé en ce que** ladite unité de surveillance et de commande (24) est conçue pour entraîner une inversion de la course vers l'extérieur dudit piston (10) à l'intérieur du cylindre (8) avant la fin du cycle de dosage.

15. Appareil selon l'une quelconque des revendications précédentes, dans lequel ledit moyen de dosage (2) introduit ladite quantité de garniture dans ledit moyen de distribution et de coupe (6) par l'intermédiaire d'un moyen formant conduite (4) dans lequel ledit moyen de dosage (2), ledit moyen formant conduite (4) et/ou ledit moyen de distribution et de coupe (6) sont équipés d'un moyen formant thermostat.

16. Utilisation d'un appareil selon l'une quelconque des revendications précédentes, pour remplir un aliment cuit avec une quantité de garniture ayant une viscosité allant de 5 000 à 15 000 mPa.s à une température de 26 °C (IOCCC procédé 46-2000).
